# NEUE EUROPÄISCHE PATENTSCHRIFT

(11) **EP 0 629 013 B2**
(45) Veröffentlichungstag und Bekanntmachung des Hinweises auf die Entscheidung über den Einspruch: **05.01.2000**
(45) Hinweis auf die Patenterteilung: 02.04.1997
(21) Anmeldenummer: 94107591.3
(22) Anmeldetag: 17.05.1994
(51) Int. Cl.: H01M 8/04, B60L 11/18

(54) **Vorrichtung zur Luftversorgung eines Brennstoffzellensystems**
Device for supplying air to a fuel cell system
Dispositif pour l'alimentation en air d'un système de piles à combustible

(30) Priorität: 07.06.1993 DE 4318818
(43) Veröffentlichungstag der Anmeldung: 14.12.1994
(73) Patentinhaber: DBB Fuel Cell Engines GmbH, 73230 Kirchheim/Teck-Nabern (DE)
(72) Erfinder: Fleck, Wolfram, D-89155 Erbach (DE)
(74) Vertreter: Kocher, Klaus-Peter

(56) Entgegenhaltungen:
- WO-A-92/00614
- DE-A- 3 304 605
- DE-A- 3 507 095
- DE-A- 3 531 296
- DE-A- 4 021 097
- FR-A- 1 436 747
- US-A- 3 972 731
- US-A- 4 923 768
- US-A- 5 083 425
- PATENT ABSTRACTS OF JAPAN vol. 016 no. 174 (E-1195) ,27.April 1992 & JP-A-04 019964 (ISHIKAWAJIMA HARIMA HEAVY IND CO LTD) 23.Januar 1992
- PATENT ABSTRACTS OF JAPAN vol. 007 no. 292 (E-219) ,27.Dezember 1983 & JP-A-58 166671 (KANSAI DENRIYOKU KK;OTHERS: 01) 1.Oktober 1983
- PATENT ABSTRACTS OF JAPAN vol. 012 no. 244 (E-631) ,9.Juli 1988 & JP-A-63 032868 (MITSUBISHI ELECTRIC CORP) 12.Februar 1988
- PATENT ABSTRACTS OF JAPAN vol. 017 no. 199 (E-1352) ,19.April 1993 & JP-A-04 342961 (ISHIKAWAJIMA HARIMA HEAVY IND CO LTD) 30.November 1992
- PATENT ABSTRACTS OF JAPAN vol. 009 no. 328 (E-369) ,24.Dezember 1985 & JP-A-60 160573 (SHIMAZU SEISAKUSHO KK;OTHERS: 01) 22.August 1985

## Beschreibung

Die Erfindung betrifft eine Vorrichtung zur Regelung der Leistung eines luftatmenden Brennstoffzellensystems gemäß dem Oberbegriff des Patentanspruchs 1.

Aus der DE 40 21 097 ist ein Brennstoffzellensystem bekannt, bei dem die Prozeßluft mit Hilfe einos oder mehrerer Verdichter vor dem Eintritt in die Brennstoffzelle komprimiert wird. Nach dem Durchströmen der Brennstoffzelle wird die abgeführte Abluft zur Energierückgewinnung über eine Turbine entspannt, wobei die Turbine, der Verdichter und ein zusätzlicher Antriebsmotor auf einer gemeinsamen Welle angeordnet sind. Der Nachteil dieser Anordnung liegt darin, daß weder der Luftvolumenstrom noch der Betriebsdruck der Prozeßluft unabhängig voneinander verändert werden kann.

In der JP-A-04019964 ist ein stationäres Brennstoffzellensystem mit einem Verdichter und einem Expander offenbart, wobei der Verdichter und der Expander auf einer gemeinsamen Welle angeordnet sind. Zur Beeinflussung des Luftvolumenstroms ist ein Ventil vorgesehen.

Zur Anpassung an unterschiedliche Lastzustände wird ein Teil der Prozeßluft über eine Bypass-Leitung direkt in den Expander eingeleitet, wobei eine Druckregeleinheit dafür sorgt, daß ein konstanter Differenzdruck Zwischen Kathodenraum und Brennstoffzellengehäuse eingestellt wird.

Die Aufgabe der Erfindung besteht darin, eine Vorrichtung zu schaffen, mit der die Leistungsabgabe des Brennstoffzellensystems in allen Betriebsbereichen bei gleichzeitiger Minimierung des Energieaufwands für die Luftverdichtung optimiert werden kann.

Die Aufgabe wird erfindungsgemäß durch die kennzeichnenden Merkmale des Patentanspruchs 1 gelöst.

Durch die Kopplung des drehzahlveränderlichen Verdichters mit dem Expander mit variablem Schluckvermögen ist es moglich, das Brennstoffzellensystems immer unter optimalen Bedingungen zu betreiben und gleichzeitig die für die Luftverdichtung benötigte Energie zu reduzieren. Ein Optimum an Leistungsabgabe des Brennstoffzellensystems wird dann erreicht, wenn der Luftüberschuß und der Betriebsdruck zu jedem Zeitpunkt optimal an die Betriebsbedingungen und an die jeweilige Systemkonfiguration angepaßt ist. Hierbei kann der Luftvolumenstrom durch eine Änderung der Verdichterdrehzahl geregelt werden. Durch die Verdichterdrehzahl ist somit Über die gemeinsame Welle zwar auch die Expanderdrehzahl vorgegeben. Jedoch kann über das vanable Schluckvermögen des Expanders auch der Betriebsdruck geregelt werden.

Ein weiterer Vorteil besteht darin, daß die in der Abluft enthaltene Restenergie durch den Expander in mechanische Energie umgewandelt und über die gemeinsame Welle dem Verdichter wieder zugeführt wird. Dadurch wird die vom Verdichter benötigte Energie reduziert.

Weitere Vorteile und Ausgestaltungen gehen aus den Unteransprüchen und der Beschreibung hervor. Die Erfindung ist nachstehend anhand einer Zeichnung, die den prinzipiellen Aufbau eines erfindungsgemäßen Brennstoffzellensystems zeigt, näher beschrieben.

Das insgesamt mit 1 bezeichnete Brennstoffzellensystem besteht aus einer Brennstoffzelle 12, beziehungsweise einem Brennstoffzellenstack, der über eine Luftzuführungsleitung 3 mit Prozeßluft versorgt wird, welche nach dem Durchströmen einer nicht gezeigten Kathodenkammer der Brennstoffzelle 12 über eine Luftabführungsleitung 5 wieder abgeführt wird. Nicht dargestellt ist auch die Anodenkammer der Brennstoffzelle 12, die über ein zweites Gasführungssystem mit Brenngas, beispielsweise Wasserstoff, beaufschlagt wird. In der Luftzuführungsleitung 3 ist ein Verdichter 6 zur Komprimierung der Prozeßluft angeordnet. Bei der Reaktion des Wasserstoffs mit dem in der Prozeßluft enthaltenen Sauerstoff in der Brennstoffzelle 12 wird neben der elektrischen Energie auch Produktwasser und Reaktionswärme erzeugt, wobei das Produktwasser und die Reaktionswarme weitgehend mit der Prozeßluft aus der Brennstoffzelle 12 abgeführt wird. Gleichzeitig ist der Luftvolumenstrom *V*_{*Luft*} beim Verlassen der Brennstoffzelle 12 um den konsumierten Sauerstoffanteil reduziert.

Zur Rückgewinnung der in der abgeführten Prozeßluft enthaltenen Druckenergie ist in der Luftabführungsleitung 5 ein Expander 16 mit vanablem Schluckvermögen vorgesehen. Der Expander 16 ist über eine gemeinsame Welle 20 mit dem Verdichter 6 verbunden, wobei auf dieser gemeinsamen Welle 20 außerdem noch ein Elektromotor 30 und ein Startermotor 28 und gegebenenfalls eine Pumpe 8 angeordnet sind. Um zu verhindern, daß der Expander 16 in bestimmten Betriebsbedingungen ein negatives Moment auf den Verdichter 6 überträgt, befindet sich zwischen Brennstoffzelle 12 und Expander 16 zusätzlich eine Klappe 32, die bei Unterdruck Umgebungsluft ansaugt. Sobald der Druck p_{L} vor dem Expander 16 steigt wird diese Klappe 32 vom Innendruck p_{L} wieder automatisch geschlossen, so daß der Expander 16 wieder Arbeit an den Verdichter 6 abgeben kann. Bei bekannten Systemen wird der notwendige Betriebsdruck p_{L} üblicherweise über ein Druckhalteventil, welches den Betriebsdruck p_{L} aufbaut und die Abluft nach dem Verlassen der Brennstoffzelle 12 an die Umgebung abläßt, eingestellt. Die Druckenergie, die dem Medium aufwendig zugeführt wurde, geht bei dieser Verfahrensweise jedoch ungenützt über die Systemgrenze verloren.

Verdichter 6 und Expander 16 basieren vorzugsweise auf dem Verdrängerprinzip, wobei spaltabgedichtete Maschinen mit fettgeschmierten Wälzlagern für die Läufergruppen verwendet werden. Der Verdichter 6 basiert auf dem volumetrischen Pumpprinzip mit innerer Verdichtung, wodurch höchste Wirkungsgrade erreicht werden können. Fettgerüche werden über das Getriebegehäuse 26 direkt nach außen entlüftet, um eine Verunreinigung der Prozeßluft zu vermeiden. Auf eine Filterstufe stromab des Verdichters 6 kann dadurch verzichtet werden. Der Expander 16 arbeitet vorzugsweise nach dem Gleichraumprinzip, kann aberauch nach dem üblichen Turbinenprozeß der polytropen Expansionsarbeit arbeiten Verdichter 6 und Expander 16 sind in einem gemeinsamen Gehäuse integriert, während der Startermotor 28 und der Elektromotor 30 angeflanscht werden.

Das in der Prozeßluft nach dem Durchströmen der Brennstoffzelle 12 enthaltene Produktwasser wird über ein oder mehrere Flüssigkeitsabscheider 18, 24 aus der Luftabführungsleitung 5 abgetrennt und in einem Vorratsbehälter 7 gesammelt. Aus diesem Vorratsbehälter 7 kann dann Wasser, welches zur Befeuchtung der angesaugten Prozeßluft benötigt wird, über eine Pumpe 8 gefördert und über eine Einspritzdüse 10 dosiert und fein verteilt in die Luftzuführungsleitung 3 eingespritzt werden. Die Pumpe 8 kann hierbei durch die gemeinsame Welle 20 oder einen separaten Motor angetrieben werden. Die Wassereinspritzung kann stromab oder auch stromauf des Verdichters 6 erfolgen. Das eingespritzte Wasser wird dabei durch die komprimierte und somit erhitzte Luft verdampft. Dies hat zur Folge, daß die Prozeßluft durch das verdampfte Wasser befeuchtet wird. Gleichzeitig wird der Prozeßluft aber auch die Verdampfungsenergie entzogen, was zu einer Senkung der Temperatur führt. Somit wird durch die Wassereinspritzung gleichzeitig die Funktion der Luftkühlung und der Luftbefeuchtung erfüllt, so daß ein separater Luftbefeuchter entfallen kann. Lediglich bei solchen Brennstoffzellenkonfigurationen, bei denen der Energieinhalt der komprimierten Prozeßluft nicht ausreicht, die gesamte Prozeßluft ausreichend zu befeuchten, kann ein zusätzlicher Luftbefeuchter 14 notwendig werden. In diesem Fall kann jedoch zumindest die Größe dieses zusätzlichen Luftbefeuchters 14 verringert werden. Wird das Wasser vor der Verdichtung eingespritzt, so wird die Verdichterleistung nochmals um 6-8% reduziert. In diesem Fall wird dem Gas nämlich die bei der Komprimierung anfallende Energie direkt als Verdampfungswärme entzogen, während bei der nachträglichen Wassereinspritzung die Gastemperatur bei der politropen Verdichtung zunächst erhöht und erst anschließend durch Entzug der Verdampfungswärme wieder gesenkt wird.

Der Antrieb des Verdichters 6 erfolgt zum einen Teil über die Energierückgewinnung mit Hilfe des Expanders 16. Zusätzlich sind auf der gemeinsamen Welle 20 jedoch noch ein Startermotor 28 und ein weiterer Elektromotor 30 angeordnet. Der Startermotor 28 wird insbesondere für mobile Anwendungen, beispielsweise im Fahrzeugbereich, benötigt, wobei die Spannungsversorgung dann über eine Fahrzeugbatterie 9 erfolgt, während der Elektromotor 30 über einen Stromregler 13 direkt von der Brennstoffzelle 12 versorgt wird. Beim Start des Brennstoffzellensystems 1 wird der Verdichter 6 solange durch den Startermotor 28 angetrieben, bis im Brennstoffzellensystem 1 ein minimaler Luftvolumenstrom *V̇*_{*min*} und ein minimaler Betriebsdruck pₘᵢₙ zur Verfügung steht. In dieser Zeit wird der Elektromotor 30 freigeschaltet. Der minimale Volumenstrom *V̇*_{*min*} und der minimale Betriebsdruck *p*_{*min*} sind so ausgelegt, daß die hierbei in der Brennstoffzelle 12 erzeugte elektrische Energie für den autarken Betrieb des gesamten Brennstoffzellensystem 1 ausreicht. Nach dem Erreichen dieses Selbstversorgungszustandes wird der Elektromotor 30 aktiviert und anschließend der Startermotor 28 abgeschaltet. Der Stromregler 13 zwischen Brennstoffzelle 12 und Elektromotor 30 dient dazu, die im Betrieb des Brennstoffzellensystems 1 auftretenden Strom- und Spannungsschwankungen auszugleichen und aus der erzeugten Gleichspannung einen pulsweitenmodulierten Wechselstrom zu erzeugen.

Zur Regelung des gesamten Brennstoffzellensystems 1 ist ein Steuergerät 11 vorgesehen. Als Regelparameter werden dem Steuergerät 11 die Brennstoffzellenspannung U_{BZ}, der Brennstoffzellenstrom I_{BZ}, die Verdichterdrehzahl n und der Luftvolumenstrom *V̇*_{*Luft*} bereitgestellt, wobei der Luftvolumenstrom *V̇*_{*Luft*} mit Hilfe eines zwischen Luftfilter 2 und Verdichter 6 in der Luftzuführungsleitung 3 angeordneten Sensors 34 ermittelt wird. Als Eingangsgröße wird dem Steuergerät 11 außerdem ein Sollwert für den Brennstoffzellenstrom I_{BZsoll} vorgegeben, Im Steuergerät 11 wird ein Sollwert für die Verdichterdrehzahl nₛₒₗₗ ermittelt und dem Stromregler 13 zur Bereitstellung des entsprechenden Stromwertes Iₛₒₗₗ zugeführt.

Das Steuergerät 11 kann außerdem auch zur Steuerung oder Regelung der Temperatur und der Feuchtigkeit der Prozeßluft verwendet werden. Selbstverständlich ist es jedoch auch möglich, hierzu ein separates Steuergerät einzusetzen. Bei der Steuerung wird im Steuergerät 11 in Abhängigkeit von Betriebsparametern ein Sollwert für die Wassereinspritzmenge ermittelt und die entsprechende Wassermenge durch Ansteuerung der Einspritzdüse eingespritzt. Bei der Regelung ist es zusätzlich erforderlich, die Temperatur und die Luftfeuchtigkeit zu messen. Die Abweichung der gemessenen Istwerte für die Temperatur beziehungsweise Feuchtigkeit der Prozeßluft von vorgegebenen Sollwerten wird dann wiederum durch Anpassung der Einspritzmenge auf Null geregelt. Reicht bei einer Anordnung der Energieinhalt der komprimierten Prozeßluft nicht aus, die erforderliche Wassermenge zu verdampfen, so wird zuerst über die Wassereinspritzmenge die Temperatur auf den vorgegebenen Sollwert geregelt und anschließend die Luftfeuchtigkeit durch einen zusätzlichen Luftbefeuchter an den vorgegebenen Sollwert angepaßt.

Der Arbeitsaufwand des Verdichters 6 steigt quadratisch mit dem Druck (Förderhöhe) und proportional mit dem geförderten Massenstrom. Die Verdichterleistung steigt mit der dritten Potenz zum Luftvolumenstrom *V̇*_{*Luft*}. Außerdem nimmt die erzeugte Brennstoffzellenleistung mit zunehmenden Luftdruck p_{L} und Luftüberschußverhältnis bei gleicher Strombelastung zu. Um einen hohen Wirkungsgrad und eine große Leistungsdichte im System zu erreichen, muß die Brennstoffzelle 12 daher bei möglichst hohem Druck p_{L} und mit befeuchteten Gasen betrieben werden. Um dies zu gewährleisten muß die vom Verdichter 6 bereitgestellte Prozeßluft mit möglichst geringem Energieaufwand erzeugt werden. Ein Optimum an Leistungsabgabe des Brennstoffzellensystems 1 wird dann erreicht, wenn der Luftüberschuß und der Betriebsdruck p_{L} an die jeweilige Brennstoffzellenkonfiguration und an die Betriebsbedingungen angepaßt wird. Weiterhin muß der Verdichter 6 über eine hohe Drehzahlspreizung und über einen hohen Wirkungsgrad im gesamten Drehzahlbereich verfügen.

Das energiesparende Betreiben eines Brennstoffzellensystems 1 wird durch laufende Anpassung des Luftvolumenstroms *V̇*_{*Luft*} bewerkstelligt. Nach dem Faraday'schen Gesetz ist der Sauerstoffbedarf proportional zum Brennstoffzellenstrom I_{BZ}, welcher sich bei entsprechender Lastanforderung einstellt. Um einen sicheren Betrieb des Brennstoffzellensystems 1 zu gewährleisten muß daher der Sauerstoff im Überschuß angeboten werden Andererseits ist es aus energetischen Gründen wünschenswert, immer nur soviel Druckluft wie notwendig bereitzustellen. Aus diesem Grund werden Sollwerte für den Luftvolumenstrom *V̇*_{*soll*} in Abhängigkeit vom Brennstoffzellenstrom I_{BZ} und dem benötigten Sauerstoffüberschußfaktor in einem Kennfeld abgelegt. Im Betrieb wird der Brennstoffzellenstrom I_{BZ} gemessen und anhand des Kennfeldes ein Sollwert für den Luftvolumenstrom *V̇*_{*soll*} ermittelt. Außerdem wird mit Hilfe des Sensors 34 der Istwert des Luftvolumenstroms *V*_{*ist*} gemessen. Die Abweichung dieser beiden Größen geht dann in eine Drehzahlregelung für den Elektromotor 30 mit Hilfe des Stromreglers 13 ein.

Damit die Leistung des Brennstoffzellensystems 1 ohne große Wirkungsgradverluste variiert werden kann, benötigt man einen Verdichterantrieb, der sich gut drehzahlregeln läßt und der einen hohen Wirkungsgrad gewährleistet. Vorzugsweise wird hierzu ein permanent erregter Synchronmotor verwendet.

Die Vorrichtung ist insbesondere für den Einsatz in Brennstoffzellensystemen mit protonenleitenden Elektrolytmembranen (PEM-Technik) geeignet. Die Anwendung ist jedoch keinesfalls auf solche Systeme beschränkt. Es kann sich um mobile oder stationäre Brennstoffzellensysteme handeln, beispielsweise für den Einsatz in Kraftfahrzeugen und Bahnsystemen, sowie für die dezentrale Stromversorgung.

Durch die geringen Trägheitsmomente der gesamten Luftversorgungseinheit, bedingt durch die kompakte Bauweise von Elektromotor, Verdichter und Expander, und die hohe Änderungsgeschwindigkeit des Elektromotors gelingt es, sehr kurze Reaktionszeiten zu verwirklichen. Dies hat eine sehr hohe Dynamik der Luftversorgung zur Folge Die Hochlaufzeiten liegen im Bereich von 50 bis 100 ms. Diese Dynamik ermöglicht es, die Luftversorgung auch in stark und schnell schwankenden Stromerzeugungssystemen, wie sie beispielsweise im Fahrzeugbereich notwendig sind, einzusetzen.

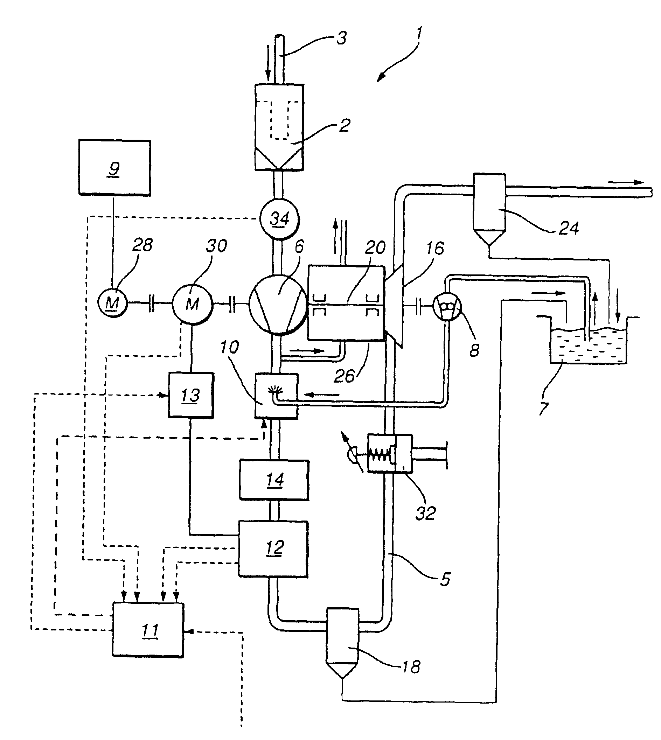

## Patentansprüche

1. Vorrichtung zur Regelung der Leistung einer luftatmenden Brennstoffzelle (12) mit einem in der Luftzuführungsleitung (3) zur Brennstoffzelle (12) angeordnetem Verdichter (6) mit veränderlicher Drehzahl (n) und mit einem in der Luftabführungsleitung (5) angeordneten Expander (16) mit veränderlichem Schluckvermögen, wobei der Verdichter (6) und der Expander (16) auf einer gemeinsamen Welle (20) angeordnet sind,
dadurch gekennzeichnet,
daß auf der gemeinsamen Welle (20) ein vom Brennstoffzellensystem (1) mit Spannung versorgter Elektromotor (30) mit zugeordnetem Stromregler (13) angeordnet ist,
daß ein Steuergerät (11) zur Ermittlung eines vorgegebenen Luft volumenstrom (V̇ₛₒₗₗ) und eines vorgegehenen Betriebsdrucks (P_{L}) im Kathodenraum der Brennstoffzelle (12) in Abhängigkeit von der Brennstoffzellenspannung (U_{BZ}), des Brennstoffzellenstroms (I_{BZ}), der Verdichterdrehzall (n) und des Luftvolumenstromes (V̇_{luft}) vorgesehen ist,
welches geeignet ist, den vorgegebenen Luftvolumenstrom (V̇ₛₒₗₗ) anhand einer Drehzahlregelung für den Elektromotor (30) mit Hilfe des Stromreglers (13) und den vorgegebenen Betriebsdruck (P_{L}) mit Hilfe des Schluchvermögens des Expanders (16) auf die vorgegebenen Sollwerte einzustellen.

2. Vorrichtung nach Anspruch 1,
**dadurch gekennzeichnet,**
daß stromauf des Expanders (16) eine Klappe (32) vorgesehen ist, über die bei anliegendem Unterdruck Umgebungsluft angesaugt werden kann.

3. Vorrichtung nach Anspruch 1,
**dadurch gekennzeichnet,**
daß auf der gemeinsamen Welle (20) zusätzlich zu dem Elektromotor (30) ein von einer Starterbatterie (9) mit Spannung versorgter Startermotor (28) angeordnet ist.

4. Vorrichtung nach Anspruch 3,
**dadurch gekennzeichnet,**
daß der Elektromotor (30) ein permanent erregter Synchronmotor ist.

## Claims

1. A device to regulate the output of an air-breathing fuel cell (12) with a variable speed compressor (6) positioned in the air supply line (3) to the fuel cell (12) and with an expander (16) with adjustable absorption capacity positioned in the air removal line (5), whereby the compressor (6) and the expander (16) are positioned on a common shaft (20),
**characterised in that**
positioned on the common shaft (20) is an electric motor (3) which is supplied with voltage from the fuel cell system (1) and to which is connected a current regulator (13),
that a control device (11) is provided to determine a pre-set air flow volume (V_{sdl}) and a pre-set operating pressure (p_{L}) in the cathode chamber of the fuel cell (12) dependent upon the fuel cell voltage (U_{BZ}), the fuel cell current (I_{BZ}), the compressor speed (n) and the air flow volume (V_{Air}),
which is suitable to set the pre-set air flow volume (V_{ref}) with a speed control device for the electric motor (30) using the current regulator (13) and the pre-set operating pressure (p_{L}) using the absorption capacity of the expander (16) to the pre-set reference values.

2. A device in accordance with Claim 1,
**characterised in that**
upstream of the expander (16) is provided a flap (32) through which ambient air can be taken in case of under-pressure.

3. A device in accordance with Claim 1,
**characterised in that**
also positioned on the common shaft (20) in addition to the electric motor (30) is a starter motor (28) which is supplied with voltage by a starter battery (9).

4. A device in accordance with Claim 3,
**characterised in that**
the electric motor (30) is a permanently excited synchronous motor.

## Revendications

1. Dispositif pour régler la puissance d'une pile à combustible (12) à respiration d'air, comportant un compresseur (6) disposé dans la canalisation d'amenée d'air (3) aboutissant à la pile à combustible (12) et possédant une vitesse de rotation (n) variable, et un dispositif de détente (16) disposé dans la canalisation (5) d'évacuation d'air et possédant un débit de dimensionnement variable, le compresseur (6) et le dispositif de détente (16) étant montés sur un arbre commun (20),
caractérisé en ce
qu'un moteur électrique (30), qui est alimenté en tension par le système de pile à combustible (1) et comporte un régulateur de courant (13) associé, est monté sur l'arbre commun (20),
qu'il est prévu un appareil de commande (11) servant à déterminer un débit volumique d'air prévu (V̇_{sdl}) et une pression de fonctionnement prédéterminée (P_{L}) dans l'espace cathodique de la pile à combustible (12) en fonction de la tension (U_{BZ}) de la pile à combustible, du courant (I_{BZ}) de la pile à combustible, de la vitesse de rotation (n) du compresseur et du débit volumique d'air (V̇ₐᵢᵣ),
lequel appareil de commande est approprié pour régler le débit volumique d'air prévu (V_{consigne}) sur la base d'une régulation de la vitesse de rotation du moteur électrique (30) à l'aide du régulateur de courant (13), et régler la pression de fonctionnement prévue (P_{L}) à l'aide du débit de dimensionnement du dispositif de détente (16), sur les valeurs de consigne prévues.

2. Dispositif selon la revendication 1, caractérisé en ce qu'en amont du dispositif de détente (16) est prévu un clapet (32), au moyen duquel de l'air ambiant peut être aspiré dans le cas de la présence d'une dépression.

3. Dispositif selon la revendication 1, caractérisé en ce que sur l'arbre commun (20) est disposé, en plus du moteur électrique (30) un moteur de démarrage (28) alimenté en tension par une batterie de démarrage (9).

4. Dispositif selon la revendication 1, caractérisé en ce que le moteur électrique (30) est un moteur synchrone à excitation permanente.
